# EUROPEAN PATENT APPLICATION

(11) **EP 2 741 312 A1**
(43) Date of publication of application: **11.06.2014**
(21) Application number: 12405124.4
(22) Date of filing: 05.12.2012
(51) Int. Cl.: H01J 49/00

(54) **Method of calibrating mass-to-charge ratio measurements obtained from a mass spectrometer connected in fluid communication with an analysis system delivering a temporally changing sample**

(71) Applicant: Tofwerk AG, 3600 Thun (CH)
(72) Inventor: Knochenmuss, Richard, 3662 Seftigen (CH)
(74) Representative: Rüfenacht, Philipp Michael

(57) **Abstract**

A method of calibrating mass-to-charge ratio measurements obtained from a mass spectrometer connected in fluid communication with a chromatographic system comprises the steps of acquiring a multiplicity of mass spectra of an analyte during an analytical run, analyzing at least some of the multiplicity of mass spectra during the analytical run for generating result data relating to a decision on introduction of a calibrant material into the mass spectrometer; and introducing the calibrant material into the mass spectrometer during the analytical run, based on the result data. An arrangement for mass analysis that is suitable for carrying out the method comprises a chromatographic system (10), a mass spectrometer (20) connected downstream, in fluid communication to the chromatographic system (10), a data acquisition device (22) for acquiring mass spectra of an analyte fed to the mass spectrometer (20), a controllable injector (30, 31) to introduce calibrant material into the mass spectrometer, and a control unit (50) receiving information on the acquired mass spectra from the data acquisition device (22), the control unit (50) configured to dynamically control the injector (30, 31) based on the received information.

## Description

### Technical Field

The invention relates to a method of calibrating mass-to-charge ratio measurements obtained from a mass spectrometer connected in fluid communication with a first analysis system delivering a temporally changing sample as well as to an arrangement for analyzing a sample, the arrangement comprising such components.

### Background Art

Various methods are known for the analysis of the composition of a given sample. Many of these include the step of subjecting the sample to an environment that leads to spatial and/or temporal separation of the different components. Examples of such methods are chromatographic methods such as gas chromatography (GC), liquid chromatography (LC), electrochemical detection (EC), super critical fluid chromatography (SCF) or further methods such as ion mobility spectrometry.

The method of gas chromatography-mass spectrometry (GC-MS) combines the step of gas chromatography with the further step of mass spectrometry. It allows for specific identification of particular substances in a given sample and has a wide range of application spanning research, environmental analysis, security checks, forensic applications, etc.

In order to ensure accurate measurements of mass-to-charge (m/q) ratios of the ions analyzed by the mass spectrometer, the mass-to-charge scale has to be calibrated. This is especially important in the case of high resolution mass spectrometers such as high resolution time-of-flight mass spectrometers (HRTOFMS).

Mass calibration in prior art GC-HRTOFMS typically involves the following steps:
- introducing a calibrant material, such as perfluorokerosene (PFK) or perfluorotributylamine (PFTBA), to the ion source for a period of time;
- recording mass spectra of the calibrant material;
- determining a relationship between the known m/q ratios of calibrant ions and their measured times of flight;
- stopping the introduction of the calibrant into the ion source;
- admitting a sample for GC-HRTOFMS analysis.

In stopping the introduction of the calibrant into the ion source during the fourth step of the procedure, calibrant material is removed from the ion source prior to the introduction of the sample, and is not re-introduced to the ion source until the analysis of the sample is completed. It is known that, over the course of a typical gas chromatography analysis, thermal drift in the temperature of the HRTOFMS flight tube will cause changes in its length due to thermal expansion or contraction, thereby inducing drift in times-of-flight.

To compensate for this effect, it is common to monitor the time-of-flight of a particular ion, that is, of a so-called lock mass. This permits one parameter in the mathematical relationship between time-of-flight and m/q ratio to be compensated for drift.

Temperature change is not the only source of drift in time-of-flight mass spectrometers. To compensate for additional sources of drift it is often necessary to monitor more than one "lock mass". Ideally, in fact, one would monitor all ions normally employed for mass calibration, throughout the analytical run. This would permit frequent updating of as many of the mass calibration parameters as there are ions in the calibrant mass spectrum. For that purpose, one may introduce calibrant material to the ion source of the HRTOFMS continuously throughout the analytical run, and perform a large number of mass calibrations during the run. This is typical in applications such as liquid chromatography coupled to high resolution mass spectrometry. A constant supply of calibrant material ensures that it is always present whenever an analyte may appear. The calibrant material may be mixed into the sample stream, or may be added in parallel, in the ion source.

In GC-MS or GCxGC-MS a constant calibrant supply can also be used (Standard Gas Addition: A Calibration Method for Handling Temporal Drifts of Mass Spectrometry-Based Sensors, Christophe Pérès, Frédéric Begnaud, and Jean-Louis Berdagué, Anal. Chem., 2002, 74 (10), pp 2279-2283). However, this may be disadvantageous for two reasons. First, calibrant ions frequently interfere with analyte ions. Second, calibrant material in the ion source competes with the analyte for ionizing agents, thus lowering sensitivity.

Accordingly, the rate of supply must be kept very low to avoid impacting measurement of analytes. This then makes it difficult to accurately determine the calibrant peak position, due to lack of counts.

In order to avoid these drawbacks, WO 2011/106640 A2 (Zoex Licensing Corporation) proposes to introduce calibrant material into the mass spectrometer during the analytical run, but in such a way that the calibrant material is only present at the ion source of the mass spectrometer when there is substantially no sample material, such as in secondary column dead bands of a comprehensive two-dimensional gas chromatograph.

This method is often useful but not always optimal. Especially in the case that a high resolution mass spectrometer is used, it is better, or even necessary, to have the calibrant in the spectrometer at the same time as the analyte. This is because the ions influence each other, which can lead to significant calibration shifts as their number changes.

Furthermore, in usual analytical runs the so-called dead bands are not free from sample material due to wrap around signals. If it is to be ensured that the calibrant does not interfere with the samples a very long run in the secondary column is needed, which will limit the resolution of the first column. Therefore, the proposed method requires slow cycles in the second column in to order to produce the required "dead band". Furthermore, there is the danger that small wrap around signals are blinded by the calibrant pulse.

### Summary of the invention

It is the object of the invention to create a method and an arrangement pertaining to the technical field initially mentioned, that offers a flexible and precise calibration of mass-to-charge ratio measurements.

The solution of the invention is specified by the features of claims 1 and 11. According to the invention, the method comprises the steps of
a) acquiring a multiplicity of mass spectra of an analyte obtained from the sample, during an analytical run;
b) analyzing at least some of the multiplicity of mass spectra during the analytical run for generating result data relating to a decision on introduction of a calibrant material into the mass spectrometer, and
c) introducing the calibrant material into the mass spectrometer during the analytical run, based on the result data.

An arrangement for analyzing a sample that is suitable for carrying out the method comprises:
a) a first analysis system delivering a temporally changing sample;
b) a mass spectrometer connected downstream, in fluid communication to the first analysis system;
c) a data acquisition device for acquiring mass spectra of an analyte fed to the mass spectrometer;
d) a controllable injector to introduce calibrant material into the mass spectrometer;
e) a control unit receiving information on the acquired mass spectra from the data acquisition device, the control unit configured to dynamically control the injector based on the received information.

It is to be noted that the term "mass spectrum" is in fact denoting a spectrum of mass-to-charge (m/q) ratios. In the context of this disclosure, an analytical run is meant to include a complete run of the combined analysis of a sample by the first analysis system and the mass spectrometer. The decision to be taken on the introduction of the calibrant material may include not only a yes/no decision but also a decision on amount or flow rate of the material and/or on the choice of calibrant material, as discussed in more detail further below.

Since it is desirable to have enough calibrant at the right time, but essentially none otherwise, it is proposed to inject an appropriate amount and type of calibrant dynamically, "on-the-fly", depending on what analytes are observed in the mass spectrum at any moment of the analytical run. Thus, the invention allows for controlling the calibration based on the actually measured data. Data dependent calibration offers maximal flexibility, minimal calibrant consumption and optimal calibration accuracy in a wide variety of situations and methods.

The method is not restricted to calibration of the mass-to-charge ratio scale, but is useful as well for specifically injecting a calibrant in order to calibrate the abundance of the analyte instead of or in addition to the mass-to-charge ratio. In this case the amplitude of calibrant injected based on the result data is used to calibrate the intensity of analyte peaks. In most cases the calibrant will serve as a reference based on previously established calibrant amplitudes compared to known analyte concentrations. This abundance measurement also includes the measurement of relative abundances, as used for example in isotope ratio mass spectrometry.

In the context of a first preferred embodiment of the arrangement, the control unit may be configured to control the injector based on the received data to dynamically switch on or switch off the injection of the calibrant material. In the context of a second preferred embodiment of the arrangement, the control unit may be configured to control the injector based on the received data to dynamically adjust an amount or flow rate of the calibrant material to be injected. In the context of a third preferred embodiment of the arrangement, the control unit may be configured to control the injector based on the received data to dynamically switch between a plurality of calibrant materials to be injected. In further preferred embodiments, two or more of these controlling options may be combined.

In a preferred embodiment, the first analysis system is a chromatographic system. Advantageously, the chromatographic system comprises a multi-dimensional chromatographic system, in particular a comprehensive two-dimensional gas chromatographic system. The inventive method and arrangement are particularly preferred in the case of GCxGC-MS, i. e. comprehensive two-dimensional gas chromatography combined with mass spectrometry. The inventive solution ensures optimum calibration for different species, throughout the entire analytical run which may take up to several hours.

The first analysis system may be based on other methods, such as other chromatographic methods like gas chromatography (GC), liquid chromatography (LC), electrochemical detection (EC), super critical fluid chromatography (SCF) or further methods such as ion mobility spectrometry. Furthermore, the first analysis system may be multi-dimensional, i. e. including at least two stages of analysis among those in principle any of the methods mentioned before.

Use of the inventive method and arrangement is particularly preferred in connection with a time-of-flight mass spectrometer, where precise calibration is essential in order to materialize the advantages of such spectrometers.

As mentioned above, in the first preferred embodiment the result data includes information about switching on and switching off the introduction of calibrant material. This allows for the dynamical initiation of the injection of calibrant material whenever a (re-)calibration is needed or useful. Also, this allows for preventing the injection of calibrant material if this would interfere with the analysis of the analyte.

In a preferred variant, the result data includes information about initiation of the injection of a pulse of calibrant material of a given amplitude and pulse width. The amplitude and pulse width may be predetermined or they may be dynamically determined based on the analysis of the mass spectra.

As mentioned above, in the second preferred embodiment the result data includes information about an amount or flow rate of calibrant material to be introduced into the mass spectrometer. This allows for dynamically adjusting the flow rate of the calibrant material or the amount of material injected within a given pulse. In particular, the flow rate may be dynamically adjusted to match properties of the analyzed mass spectra.

In particular for the purpose of adjusting the amount or flow rate, the controllable injector preferably comprises an electronically adjustable calibrant injection valve, for example a fast solenoid valve. In other embodiments the injector comprises backflush switches, which rapidly switch a capillary flow from carrier gas to calibrant gas and back.

A preferred embodiment of the invention comprises a controlled gas injection system which has fast rise and fall times. Conventional calibration gas systems inject gas using a transfer line. The valve is some distance from the ionization chamber, either for convenience or because the valve is too large to mount close to the mass spectrometer. The transfer line spreads out the gas pulse, which may cause it to be too slow for data dependent calibration. In other implementations, gas is injected into the chamber containing the ionizer but at some distance from it. To have sufficient signal, large gas amounts must be injected, and the consequent washout is slow. This may also reduce the applicability of data dependent calibration.

An embodiment which has proven to be advantageous for the injection of a calibrant, especially for data dependent calibration, uses a solenoid valve comprising a piston having a polymer sealing face and a hard orifice plate, the polymer sealing face of the piston sealing against the orifice plate. In particular, the valve is a subminiature solenoid valve having an outside diameter of only a few mm and a length of less than 2 cm. This allows for mounting the valve very close to the point of ionization. The piston is lightweight and the polymer sealing face may be manufacture e. g. from Torlon. The hard orifice plate may be manufactured e. g. from sapphire. The very small size and light weight of the piston make it possible to actuate the valve very quickly, both opening and closing. The power requirements are also very low due to the small size.

Preferably, the gas flow expands directly into the ionization region of the mass spectrometer, reducing the amount needed for a suitable signal.

The field of use of this solenoid valve is not restricted to arrangements in which the injector is dynamically controlled based on information obtained from acquired mass spectra. It is advantageous also in other systems and applications where clearly defined pulses of calibrant material are needed in a mass spectrometer.

As mentioned above, in the third preferred embodiment the result data includes information about a choice of calibrant material to be introduced into the mass spectrometer. For that purpose, multiple injection valves (or calibrant pulsers) can be incorporated into the instrument. The calibrants can be chosen to have different characteristics. For example it might be desirable to have a low molecular weight and a high molecular weight calibrant, to further maximize calibration accuracy for analytes with varying molecular weights. Different calibrants also allow for calibration even if one calibrant collides with an analyte component.

In a first preferred mode of the inventive method, the result data is generated to activate the introduction of the calibrant material when a total ion current exceeds a predetermined threshold. For that purpose, the mass spectrometer is used to monitor the total ion current during the GC run. As soon as it exceeds the threshold a trigger is generated by the software controlling the system. The trigger initiates the injection of calibrant material, e. g. by releasing a certain pulse of injection of calibrant material. The pulse will appear with an unavoidable short delay, due to electrical and mechanical effects, but it will overlap substantially or entirely with the chromatography peaks. Thus, the injection of calibrant during "silent" phases is avoided. Further, the threshold may be selected not only to avoid triggering on noise, but also to avoid triggering on small peaks near the limit of detection, which could be adversely affected by many calibrant ions in the instrument.

In an alternative mode, the introduction of the calibrant - which would be activated due to the fulfilment of other criteria - is suspended when a total ion current is below a predetermined threshold. Doing so, in these specific cases the measurement of the analyte is not impacted by the calibrant.

In a second preferred mode of the inventive method, the at least some of the multiplicity of mass spectra are searched for at least one of a list of predetermined values of m/q. The result data is generated to activate the introduction of the calibrant material when at least one of the list of values is present in a given spectrum. In the case of targeted analysis, the objective is to measure a set of predefined substances. The trigger can be limited to those specific mass/charge or retention time values of interest. This saves expensive calibrant, reduces contamination of the instrument, and allows modulation of the calibrant to match the analyte signals.

In other cases there are often peaks of no interest, but which are present in every run. These may be intrinsic to the sample (e.g. solvent), or intrinsic to the instrument (e. g. column bleed, residual gases). The software could trigger on these to achieve three objectives:
a) to ensure that the calibrant does not accidentally overshadow a very weak analyte signal,
b) to have a calibrant signal at a known time in the run, yet temporally relatively close to the analyte,
c) to calibrate with a significant ion population in the spectrometer, to correct for ion quantity effects.

In a third preferred mode of the inventive method, at least some of the multiplicity of mass spectra are searched for at least one of a list of predetermined mass spectral characteristics. The result data is generated to activate the introduction of the calibrant material when at least one of the list of characteristics is present in a given spectrum. There are significant analyte classes which exhibit specific characteristics for all members of the class. An example would be multiply halogenated substances (e.g. pesticides), which have characteristic isotopic patterns and characteristic mass defects. It is particularly important to have accurate calibration for these species, since it is exactly these mass defects which aid in identification.

In a fourth preferred mode of the inventive method, the at least some of the multiplicity of mass spectra are searched for at least one of an exclusion list of predetermined peak characteristics and wherein the result data is generated to activate the introduction of the calibrant material when none of the exclusion list of characteristics is present in a given spectrum. This allows for calibrating only on substances of probable interest, for example to conserve calibrant, while achieving maximum calibration accuracy. Suitable peak characteristics include m/q, retention time, peak magnitude, etc.

In particular, the list may be prepared to contain mass/charge ratios corresponding to those of the calibrant(s) or any of its typical fragments, in order to prevent loss of the corresponding analyte signals.

In a fifth preferred mode of the inventive method, the result data is generated to control the amount or flow rate of calibrant material to be introduced based on a level of an analyte peak of the at least some of the multiplicity of mass spectra. Usually, it is advantageous to restrict the calibrant quantity if the analyte peak is small. This reduces baseline noise, permitting more accurate measurement of the analyte peak. For strong analyte peaks, the calibrant quantity can be increased to provide optimal counting statistics and best calibration accuracy.

Within a certain range of intensities, the calibrant can also be injected so as to yield a constant total ion quantity (analyte plus calibrant) in the mass spectrometer. This ensures maximally consistent spectrometer performance between peaks, and is particularly valuable in trap type instruments.

In an embodiment including a multi-dimensional analysis system, the introduction of calibrant material may be suspended for at least one substantially complete analysis run in the last stage of the multi-dimensional analysis system (such as the second column of a 2-dimensional GC system). Due to the lower detection limit, this makes sure that features of the spectrum that are overlooked due to the calibration become apparent in the corresponding time interval. Furthermore, the subtraction of the calibrant material is facilitated.

The introduction of the calibrant material may be suspended in regular intervals such as e. g. every 2nd, 3rd, 4th, ... run of the second stage. Alternatively, the suspension may be controlled based on the mass spectra and/or on measurements taken in the first analysis system.

It is to be noted that this particular method of suspending the injection during substantially complete runs of the last stage is applicable not only to systems involving the introduction of the calibrant material into the mass spectrometer based on result data obtained from the mass spectrometer, but to other systems having a mass spectrometer connected in fluid communication with a (multi-dimensional) first analysis system delivering a temporally changing sample.

Other advantageous embodiments and combinations of features come out from the detailed description below and the totality of the claims.

### Brief description of the drawings

The drawings used to explain the embodiments show:
- Fig. 1: A block diagram of an embodiment of an arrangement according to the invention;
- Fig. 2: the 2-dimensional total ion current and integrated spectrum of a GCxGC analysis;
- Fig. 3: the sum spectrum of the GCxGC analysis;
- Fig. 4: a first example of data dependent calibration; and
- Fig. 5: a second example of data dependent calibration.

In the figures, the same components are given the same reference symbols.

### Preferred embodiments

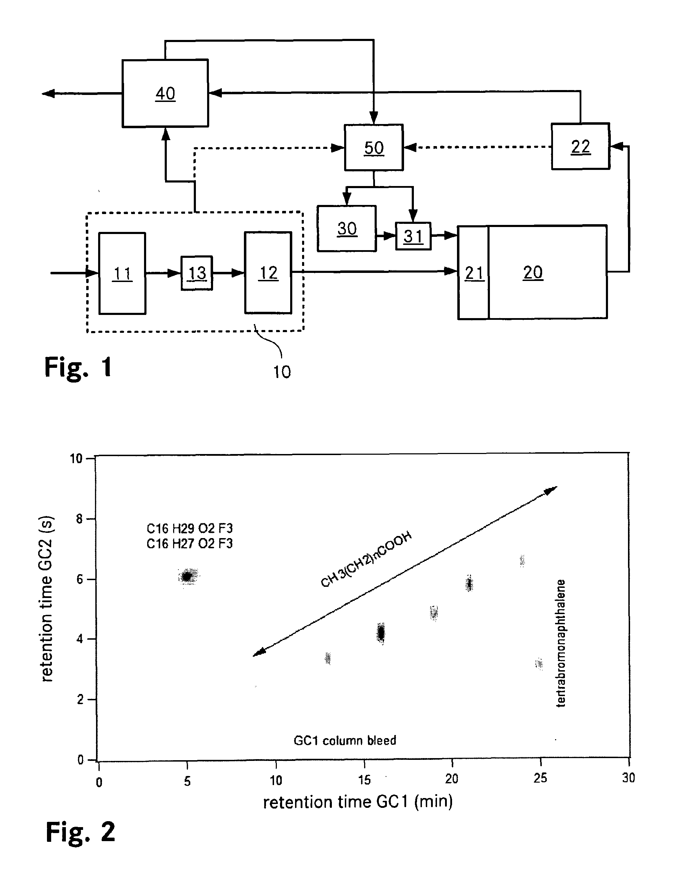

The Figure 1 shows a block diagram of an embodiment of an arrangement according to the invention. It includes a system 10 of two gas chromatographs 11, 12 linked to each other, a modulator 13 being connected in between the two chromatographs 11, 12. Corresponding devices are available e. g. from Agilent Technologies, Santa Clara, USA as type 7890A GC with two columns, e. g. a first column Phenomenex DB-1 10m x 0.1 mm (dimethylpolysiloxane phase) and a second column Phenomenex BPX-50 1m x 0.1 mm (cyanopropylphenyl polysiloxane phase). It further includes a high resolution time-of-flight mass spectrometer (TOFMS) 20 connected downstream to the chromatographs 11, 12 , the TOFMS including an electron ionization (EI) ion source 21, such as available from TOFWERK AG, Thun, Switzerland as type EI-HTOF.

A calibrant source 30 including an electronically adjustable calibrant injection valve 31 is coupled to an input of the ion source 21 of the TOFMS 20. The calibrant valve 31 is able to generate calibrant pulses. A suitable arrangement involving a capillary backflush valve is described in the patent application published as WO 2011/106640 A2 (Zoex Licensing Corporation), par. 0046-0051 and Fig. 8; the corresponding disclosure is hereby incorporated by reference. Alternatively, direct injection solenoid valves may be used. In principle, all valve types can be used as long as they have fast switching times, low leakage and low dead volumes. The TOFMS 20 includes a data acquisition device 22 for the acquisition of mass/charge (m/q) spectra analyzed by the TOFMS 20. The data acquisition device 22 of TOFMS 20 and the corresponding data acquisition system of the system 10 are connected to a central processing unit 40, which receives data from the acquisition systems, in particular measurement data.

The calibrant source 30 and the calibrant injection valve 31 are controlled by a control unit 50 which receives data from the data acquisition device 22 of the TOFMS 20. A suitable calibrant is e. g. Perfluoromethyldecalin.

Generally, the operation of the arrangement in the course of a GCxGC-MS analysis is as follows: Sample material is fed to the first chromatograph 11 and subjected to a comprehensive two-dimensional gas chromatography process which is known as such. The molecules eluted in the second column are fed to the ion source 21 of the mass spectrometer 20. The ions generated by the ion source 21 are fed to the TOF path in order to determine the corresponding m/q ratio, the mass-to-charge spectrum being acquired by the data acquisition device 22.

The control unit 50 is fed with data dependent triggers from the central processing unit 40. Depending on these triggers, the injection of calibrant by calibrant source 30 and injection valve 31 into the ion source 21 of the TOFMS 20 is controlled as described in detail further below.

In variants of the described embodiments, the control unit 50 is controlled in addition or as an alternative based on data, such as measurement data (e. g. mass spectra) or data dependent triggers, received from any of the chromatographs 11, 12 and/or the central data acquisition device 22 of the mass spectrometer 20, as indicated in Figure 1 by the dashed arrows. It is to be noted that the block diagram of Figure 1 represents the functional relationship of the components and not their physical deployment. Accordingly, the function of a plurality of the shown components may be provided by a single unit, or the functions of one of the shown components may be provided by a plurality of units.

The functionality of the inventive system is further explained in connection with Figures 2 - 5. The Figure 2 shows the 2-dimensional total ion current and integrated spectrum of a GCxGC-TOFMS analysis. Retention time on the first GC column (RT1) is on the horizontal axis, retention time on the second GC column (RT2) is on the vertical axis.

The stripe at the bottom (GC1 column bleed) is siloxane bleed from the first column (148Th), which elutes continuously from GC1. There is a series of homologous compounds, CH3(CH2)nCOOH, n = 8 - 14, with increasing retention time on both columns. An unresolved pair (C16H29O2F3, C16H27O2F3) is found near RT1 = 5 min, RT2 = 6 min, while tetrabromonaphthalene appears at approximately RT1 = 25 min, RT2 = 3 min.

In real time, the data are acquired from bottom to top of the 2-D plot (RT2), sequentially for each RT1; while GC2 is being measured, the effluent from GC1 is being collected. The data acquisition device 22 of TOFMS 20 is typically acquiring spectra at a high rate, such as 100 Hz or even higher. This means that the mass spectrum is acquired in a quasi-continuous fashion, measured in the time scale of the second GC column. A chromatography peak may be one or a few seconds. The computer therefore has time to evaluate the ions which are arriving. One or several criteria can be evaluated, to decide if, and how much calibrant should be injected to calibrate the current chromatography data.

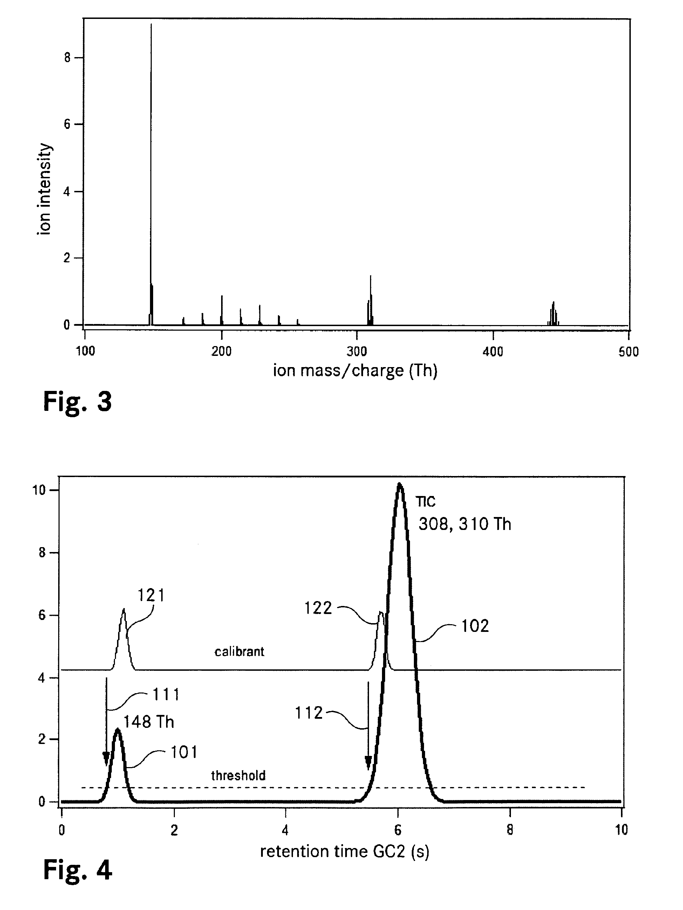

The sum spectrum shown in Figure 3 is dominated by the bleed peak (148 Th). It is not the largest peak at any RT1, but is always present, and contributes greatly to the sum.

Figure 4 displays a first example of data dependent calibration. The graph shows the total ion current (TIC) as determined by the TOFMS 20 at a given RT1 as a function of the retention time RT2 in the second column. The total ion current (TIC) at a given RT1 is evaluated for the appearance of any peak. The calibrant pulser is activated if the ion current reaches a threshold. Figure 4 illustrates this for RT1 = 5 min. The TIC shows two peaks in real time (which corresponds to RT2), namely the column bleed (148 Th, peak 101) at RT2 = 1 min and the overlapping peaks 102 at RT2 = 6 min (308 Th, 310 Th). When the TIC exceeds the threshold shown by the dashed line, triggers 111, 112 are generated in software, releasing the indicated calibrant pulses 121, 122. These appear with an unavoidable small electrical and mechanical delay after the trigger, but overlap substantially or entirely with the GC peaks 101, 102. For that purpose, the pulses have a width corresponding to a typical width of the GC peaks to be expected, such as a width of typically about 50 ms and steep rising and falling edges with low leakage. The calibrant pulse width can also be chosen to have widths which defer from the widths of the GC peaks, in particular for deconvoluting possible interferences.

The threshold is selected not only to avoid triggering on noise, but also to avoid triggering on small peaks near the limit of detection, which could be adversely affected by many calibrant ions in the instrument.

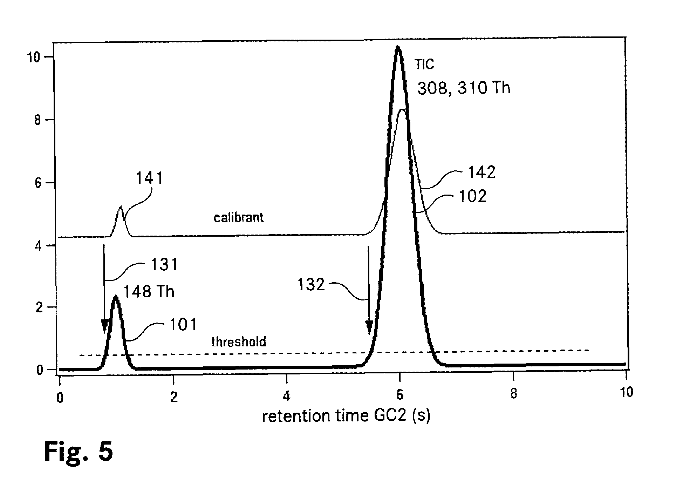

Figure 5 displays a second example of data dependent calibration. The calibrant quantity is modulated to a level appropriate for the analyte peak detected. This is effected by means of the electronically adjustable calibrant injection valve 31. For example, it is usually advantageous to restrict the calibrant quantity if the analyte peak is small. This reduces baseline noise, permitting more accurate measurement of the analyte peak. For strong analyte peaks, the calibrant quantity can be increased to provide optimal counting statistics and best calibration accuracy.

In the example of the spectrum shown in Figure 5, the first trigger 131 corresponding to the first peak 101 (height 2.5 in arbitrary units) results in a small calibrant peak 141, while the second trigger 132 corresponding to the second peak 102 (height 10) results in a larger calibrant peak 142.

The pulses may also be stretched in time to match the GC peak width. As an example, the pulse height and width may be adjusted in such a way that the ratio between pulse height and pulse width is always constant. Within a certain range of intensities, the calibrant could also be injected so as to yield the same total ion quantity (analyte plus calibrant) in the mass spectrometer. This ensures maximally consistent spectrometer performance between peaks, and is particularly valuable in trap type instruments.

Further modes of data dependent calibration are feasible.

### Trigger on a specific peak, or list of peaks

In the case of targeted analysis, the objective is to measure a set of predefined substances. The trigger can be limited to those specific mass/charge values of interest.

This saves expensive calibrant, reduces contamination of the instrument, and allows modulation of the calibrant to match the analyte signals. In the above example this could be the mass of the substances at RT2 = 6 min (308 or 310 Th). In this case, the first trigger (column bleed, 148 Th) would not occur, only the later one.

Alternatively, there are often peaks of no interest, but which are present in every run. These may be intrinsic to the sample (e.g. solvent), or intrinsic to the instrument (e-g-column bleed, residual gases). The software could trigger on these to achieve 3 objectives:
a) ensure that the calibrant does not accidentally overshadow a very weak analyte signal,
b) have calibrant signal at a known time in the run, yet temporally relatively close to the analyte, c) calibrate with a significant ion population in the spectrometer, to correct for ion quantity effects. In the above example, the first trigger, on the column bleed, could be selected both by mass of the characteristic siloxane (148 Th), and also by its known RT2 (1 min). The second trigger, on the analyte, would not occur.

### Trigger on a class of peaks, based on mass spectral characteristics

There are significant analyte classes which exhibit specific characteristics, for all members of the class. An example would be multiply halogenated substances (e.g. pesticides), which have characteristic isotopic patterns and characteristic mass defects. It is particularly important to have accurate calibration for these species, since it is exactly these mass defects which aid in identification. In the above specific example the criterion could be tailored to encompass the masses of the CH3(CH2)nCOOH series.

### Inhibit the trigger for a specific peak or list of peaks

It may be desirable to calibrate only on substances of probable interest, for example to conserve calibrant while achieving maximum calibration accuracy. In this case, an exclusion list would be consulted before triggering, or peaks could be excluded based on general properties, such as mass/charge, retention time, peak magnitude, etc.

In the above specific example, the CH3(CH2)nCOOH series might be uninteresting background, and the column bleed is never interesting. The exclusion list would then include 8 masses. Calibrant triggers would only be generated at RT1 = 5 and 25 min, for the peaks not on the exclusion list.

### Inhibit the trigger for analytes that collide with the calibrant peaks

If a detected analyte peak appears at a mass/charge ratio which conflicts with the calibrant or any of its typical fragments, triggering can be inhibited to prevent loss of this analyte signal.

### Inject different calibrants depending on the analyte

Multiple calibrant pulsers can be incorporated into the instrument. The calibrants can be chosen to have different characteristics. For example it might be desirable to have a low molecular weight and a high molecular weight calibrant, to further maximize calibration accuracy for analytes with varying molecular weights. Different calibrants also allows for calibration even if one calibrant collides with an analyte.

The invention is not limited to the embodiments described above. In particular, the invention encompasses GC-MS application with 1-dimensional GC. Furthermore, details of the shown arrangement may be implemented differently, and other or further criteria may be used for controlling the injection of calibrant.

In particular, the decision about the injection of the calibrant may be based on mass spectra obtained during a complete run or even a plurality of runs in the second GC column. Due to the fact that a certain analyte composition obtained from the first column extends over a number of runs in the second column, the data dependent calibration will still be adapted to the analyte processed by the mass spectrometer. Employing mass spectra obtained during a longer time allows for much more time to evaluate interferences with the spectra and to decide whether to calibrate or not and/or to decide about the pulse characteristics, timing or amount of calibrant.

In summary, it is to be noted that the invention creates a method and an arrangement of calibrating mass-to-charge ratio measurements, that offer high flexibility and precision.

## Claims

1. A method of calibrating mass-to-charge ratio measurements obtained from a mass spectrometer connected in fluid communication with a first analysis system delivering a temporally changing sample, the method comprising the steps of:
a) acquiring a multiplicity of mass spectra of an analyte obtained from the sample, during an analytical run;
b) analyzing at least some of the multiplicity of mass spectra during the analytical run for generating result data relating to a decision on introduction of a calibrant material into the mass spectrometer; and
c) introducing the calibrant material into the mass spectrometer during the analytical run, based on the result data.

2. The method as recited in claim 1, wherein the first analysis system is a chromatographic system.

3. The method as recited in claim 1 or 2, wherein the result data includes information about switching on and switching off the introduction of calibrant material.

4. The method as recited in claim 3, wherein the result data includes information about initiation of the injection of a pulse of calibrant material of a given amplitude and pulse width.

5. The method as recited in one of claims 1 to 4, wherein the result data includes information about an amount or flow rate of calibrant material to be introduced into the mass spectrometer.

6. The method as recited in one of claims 1 to 5, wherein the result data includes information about a choice of calibrant material to be introduced into the mass spectrometer.

7. The method as recited in one of claims 1 to 6, wherein the result data is generated to activate the introduction of the calibrant material when a total ion current exceeds a predetermined threshold.

8. The method as recited in one of claims 1 to 7, wherein the at least some of the multiplicity of mass spectra are searched for at least one of a list of predetermined values of m/q and wherein the result data is generated to activate the introduction of the calibrant material when at least one of the list of values is present in a given spectrum.

9. The method as recited in one of claims 1 to 8, wherein at least some of the multiplicity of mass spectra are searched for at least one of a list of predetermined mass spectral characteristics and wherein the result data is generated to activate the introduction of the calibrant material when at least one of the list of characteristics is present in a given spectrum.

10. The method as recited in one of claims 1 to 9, wherein the at least some of the multiplicity of mass spectra are searched for at least one of an exclusion list of predetermined peak characteristics and wherein the result data is generated to activate the introduction of the calibrant material when none of the exclusion list of characteristics is present in a given spectrum.

11. The method as recited in claim 5, wherein the result data is generated to control the amount or flow rate of calibrant material to be introduced based on a level of an analyte peak of the at least some of the multiplicity of mass spectra.

12. The method as recited in one of claims 1 to 11, wherein the first analysis system is a multi-dimensional analysis system.

13. The method as recited in claim 12, wherein an introduction of calibrant material is suspended for at least one substantially complete analysis run in a last stage of the multi-dimensional analysis system.

14. An arrangement for analyzing a sample comprising:
a) a first analysis system delivering a temporally changing sample;
b) a mass spectrometer connected downstream, in fluid communication to the first analysis system;
c) a data acquisition device for acquiring mass spectra of an analyte fed to the mass spectrometer;
d) a controllable injector to introduce calibrant material into the mass spectrometer;
e) a control unit receiving information on the acquired mass spectra from the data acquisition device, the control unit configured to dynamically control the injector based on the received information.

15. The arrangement as recited in claim 14, wherein the first analysis system is a chromatographic system.

16. The arrangement as recited in claim 15, wherein the chromatographic system comprises a multi-dimensional chromatographic system, in particular a comprehensive two-dimensional gas chromatographic system.

17. The arrangement as recited in one of claims 14 to 16, wherein the mass spectrometer is a time-of-flight mass spectrometer.

18. The arrangement as recited in one of claims 14 to 17, wherein the controllable injector comprises an electronically adjustable calibrant injection valve.

19. Use of a solenoid valve for introducing a calibrant material into a mass spectrometer, the solenoid valve comprising a piston having a polymer sealing face and a hard orifice plate, the polymer sealing face of the piston sealing against the orifice plate.

20. Use as recited in claim 19, **characterized in that** a calibrant flow delivered by the valve expands directly into an ionization region of the mass spectrometer.
